(19) Europäisches Patentamt / European Patent Office / Office européen des brevets

(11) **EP 1 726 427 B1**

(12) **EUROPEAN PATENT SPECIFICATION**

(45) Date of publication and mention
of the grant of the patent:
**15.05.2013 Bulletin 2013/20**

(21) Application number: **05721121.1**

(22) Date of filing: **18.03.2005**

(51) Int Cl.:
***B29C 45/66*** *(2006.01)*          ***B29C 33/22*** *(2006.01)*

(86) International application number:
**PCT/JP2005/004934**

(87) International publication number:
**WO 2005/090053 (29.09.2005 Gazette 2005/39)**

(54) **MOLD CLAMPING DEVICE AND MOLD CLAMPING METHOD**

FORMWERKZEUGVERRIEGELUNGSVORRICHTUNG UND
FORMWERKZEUGVERRIEGELUNGSVERFAHREN

DISPOSITIF DE SERRAGE DE MOULE ET PROCEDE DE SERRAGE DE MOULE

(84) Designated Contracting States:
**AT CH DE IT LI**

(30) Priority: **19.03.2004 JP 2004080005**

(43) Date of publication of application:
**29.11.2006 Bulletin 2006/48**

(73) Proprietor: **SUMITOMO HEAVY INDUSTRIES, LTD.**
**Shinagawa-ku,**
**Tokyo 1416025 (JP)**

(72) Inventors:
• **TOKUI, Yosuke,**
**SUMITOMO HEAVY INDUSTRIES, LTD.**
**Chiba-shi,**
**Chiba 263-0001 (JP)**
• **MORITANI, Kouji,**
**SUMITOMO HEAVY INDUSTRIES, LTD.**
**Yokosuka-shi,**
**Kanagawa 237-0061 (JP)**
• **KONNO, Takeshi,**
**SUMITOMO HEAVY INDUSTRIES, LTD.**
**Chiba-shi,**
**Chiba 263-0001 (JP)**

(74) Representative: **Wagner, Karl H.**
**Wagner & Geyer Partnerschaft**
**Patent- und Rechtsanwälte**
**Gewürzmühlstrasse 5**
**80538 München (DE)**

(56) References cited:
| | |
|---|---|
| WO-A1-01/38070 | DE-A1- 3 715 161 |
| JP-A- 10 151 649 | JP-A- 11 028 746 |
| JP-A- 11 058 472 | JP-A- 61 154 822 |
| JP-A- 61 154 823 | |

• HENGESBACH H A ET AL: "AUSTRUESTUNG VON SPRITZGIESSMASCHINEN" PLASTVERARBEITER, HUETHIG GMBH, HEIDELBERG, DE, vol. 27, no. 11, 1 November 1976 (1976-11-01), pages 583-594, XP001202490 ISSN: 0032-1338
• "NIEUWE MACHINES EN HULPAPPARATUUR" PLASTICA, UITGEVERSMAATSCHAPPIJ REFLEX. ROTTERDAM, NL, vol. 23, no. 3, 1 March 1970 (1970-03-01), page 102/103, XP001172731
• "NEUE VERARBEITUNGSMASCHINEN UND -GERAETE SPRITZGIESSMASCHINEN SPRITZGIESSMASCHINE MIT MIKROPROZESSOR-STEUERUNG" KUNSTSTOFFE, CARL HANSER VERLAG, MUNCHEN, DE, vol. 66, no. 11, 1 November 1976 (1976-11-01), pages 727-729, XP001172741 ISSN: 0023-5563

## Description

TECHNICAL FIELD

The present invention relates to a mold-clamping apparatus and a method-clamping method.

BACKGROUND ART

Conventionally, a molding machine; for example, an injection molding machine, includes an injection apparatus, a mold apparatus, and a mold-clamping apparatus and produces a molded product by means of injecting resin into a cavity of the mold apparatus through an injection nozzle of the injection apparatus and setting the resin in the cavity. The mold apparatus includes a stationary mold and a movable mold and can perform mold closing, mold clamping, and mold opening by means of operating the mold-clamping apparatus so as to advance the movable mold toward and retreat the movable mold from the stationary mold.

The mold-clamping apparatus includes a stationary platen to which the stationary mold is attached; a movable platen to which the movable mold is attached; an electric motor; a ball screw which includes a ball screw shaft connected to an output shaft of the motor and a ball nut screw-engaged with the ball screw shaft; a crosshead connected to the ball nut; and a toggle mechanism disposed between the crosshead and the movable platen. The crosshead is advanced by driving the motor so as to extend the toggle mechanism, thereby performing mold closing and mold clamping.

However, since the thus-configured mold-clamping apparatus uses the toggle mechanism for generating a mold-clamping force, a bending moment is exerted on the movable platen, causing generation of strain on the mold-mounting surface of the movable platen.

Since mold clamping is performed by extending the toggle mechanism, controlling a mold-clamping force is difficult.

In order to cope with the above problem, there is proposed a mold-clamping apparatus which includes an electric motor and an electromagnet and which utilizes the torque of the motor for performing mold closing and mold opening, as well as the attracting force of the electromagnet for performing mold clamping (refer to, for example, JP-A-3190600.

In the proposed mold-clamping apparatus, a rear platen is disposed with a predetermined distance to a stationary platen therefrom, and a movable platen is disposed in a manner capable of advancing and retreating along tie bars extending between the stationary platen and the rear platen. The electromagnet is fixed on the back surface of the rear platen; an attraction plate is disposed rearward of the rear platen in a manner capable of advancing and retreating; a link mechanism is disposed between the attraction plate and the movable platen; and the link mechanism can be bent and extended by driving the rotary-type motor, whereby the movable platen is advanced and retreated so as to perform mold opening and mold closing.

Accordingly, after mold closing is performed by extending the link mechanism through driving of the motor, the electromagnet is driven so as to attract the attraction plate thereto, whereby mold clamping can be performed. In this case, since the electromagnet is used to generate a mold-clamping force, no bending moment is exerted on the movable platen, and thus no strain arises on the mold-mounting surface of the movable platen. Also, a mold-clamping force can be readily controlled.

DE 37 15 161 A1 describes a clamping unit for injection molding, which is operated by a linear motor. To increase the mould clamping pressure, an electromagnet is additionally provided.

JP 61 154 822 A relates to a clamping apparatus for an injection molding machine. It uses a combination of a linear motor and an electromagnet for clamping.

DISCLOSURE OF THE INVENTION

PROBLEMS TO BE SOLVED BY THE INVENTION

However, in the above-mentioned conventional mold-clamping apparatus, a plurality of components must be disposed between the motor and the movable platen, and therefore, the positional accuracy of the movable platen cannot be increased sufficiently.

An object of the present invention is to solve the above-mentioned problem in the conventional mold-clamping apparatus and to provide a mold-clamping apparatus and a mold-clamping method which can sufficiently increase accuracy of mold opening and closing.

MEANS FOR SOLVING THE PROBLEMS

In accordance with the present invention, a mold-clamping apparatus and a mold-clamping method as set forth in claims 1 and 8 is provided. Further embodiments of the invention are claimed in the dependent claims. To achieve the above object, a mold-clamping apparatus of the present invention inter alia comprises a first stationary member to which a stationary mold is attached; a first movable member disposed in opposition to the first stationary member and to which a movable mold is attached; a second movable member which is advanced and retreated in association with advancement and retreat of the first movable member; a mold-clamping-force transmission member connecting the first and second movable members; and a drive section for mold opening and closing, the drive section advancing and retreating the first movable member to thereby effect mold opening and closing.

When the drive section for mold opening and closing overlaps the mold-clamping-force transmission member at least partially,
the overall length of the mold-clamping apparatus can be shortened.

Moreover, since the drive section for mold opening and closing and the drive section for mold clamping are provided independently of each other, the drive section for mold opening and closing and the first movable member can be connected directly. Accordingly, the accuracy of mold opening and closing can be improved sufficiently.

BRIEF DESCRIPTION OF DRAWINGS

FIG. 1 is a view showing a first example of a mold claiming apparatus in which a mold apparatus and a mold-clamping apparatus are in a mold-closed condition.

FIG. 2 is a view showing the first example in which the mold apparatus and the mold-clamping apparatus are in a mold-opened condition.

FIG. 3 is a view showing a second example in which a mold apparatus and a mold-clamping apparatus are in a mold-closed condition.

FIG. 4 is a view showing a third example in which a mold apparatus and a mold-clamping apparatus are in a mold-closed condition.

FIG. 5 is a view showing a first embodiment of the present invention in which a mold apparatus and a mold-clamping apparatus are in a mold-closed condition.

FIG. 6 is a view showing a second embodiment of the present invention in which a mold apparatus and a mold-clamping apparatus are in a mold-closed condition.

FIG. 7 is a sectional view taken along line X-X of FIG. 6.

FIG. 8 is a sectional view taken along line Y-Y of FIG. 6.

FIG. 9 is a sectional view taken along line Z-Z of FIG. 6.

FIG. 10 is a view showing a fourth example in which a mold apparatus and a mold-clamping apparatus are in a mold-closed condition.

FIG. 11 is a sectional view taken along line A-A of FIG. 10.

FIG. 12 is a sectional view taken along line B—B of FIG. 10.

FIG. 13 is a sectional view taken along line C-C of FIG 10.

FIG. 14 is a view showing a third embodiment of the present invention in which a mold apparatus and a mold-clamping apparatus are in a mold-closed condition.

BEST MODE FOR CARRYING OUT THE INVENTION

Embodiments of the present invention as well as examples not falling under the terms of the appended claims will next be described in detail with reference to the drawings. In description of the embodiments, the terms front and rear are used as follows: in the case of a mold-clamping apparatus, front refers to a direction in which a movable platen moves at the time of mold closing, and rear refers to a direction in which the movable platen moves at the time of mold opening; and in the case of an injection apparatus, front refers to a direction in which a screw moves at the time of injection, and rear refers to a direction in which the screw moves at the time of metering.

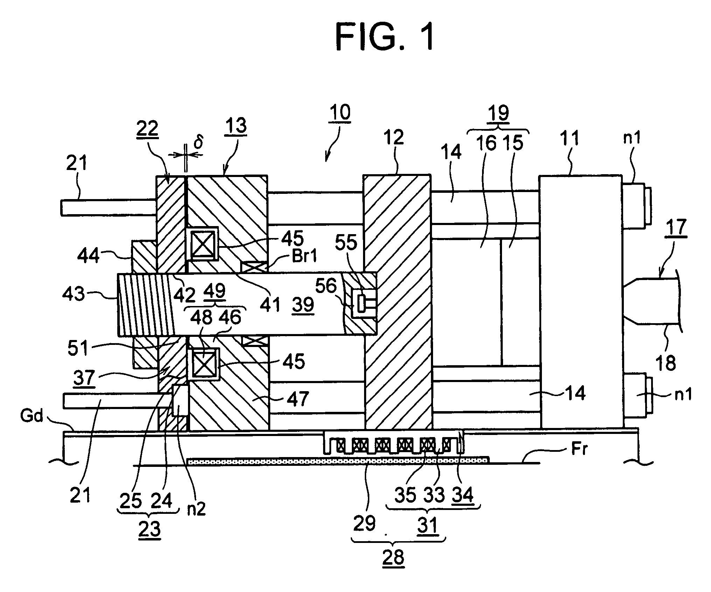

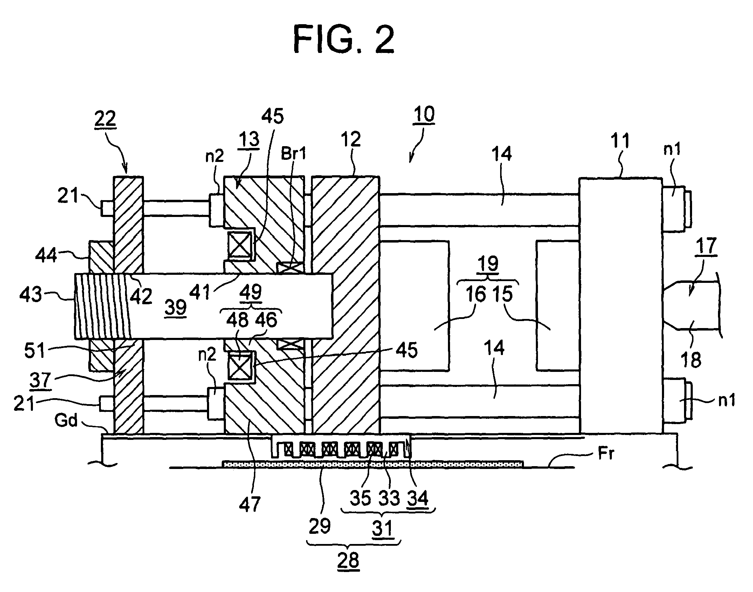

FIG. 1 is a view showing a first example in which the mold apparatus and the mold-clamping apparatus are in a mold-closed condition. FIG. 2 is a view showing the first example in which the mold apparatus and the mold-clamping apparatus are in a mold-opened condition.

In the drawings, reference numeral 10 denotes a mold-clamping apparatus; Fr denotes a frame of an injection molding machine; Gd denotes two guides (the drawings show only one of the two guides Gd) which are laid on the frame Fr and form rails, support and guide the mold-clamping apparatus 10, and serve as first guide members; and reference numeral 11 denotes a stationary platen which is disposed on the guides Gd, is fixed to the frame Fr and to the guides Gd, and serves as a first stationary member. A rear platen 13 which serves as a second stationary member is disposed in opposition to the stationary platen 11 with a predetermined distance therebetween. Four tie bars 14 (the drawings show only two of the four tie bars 14) which serve as connection members extend between the stationary platen 11 and the rear platen 13. The rear platen 13 is disposed on the guides Gd in such a manner as to be slightly movable in relation to the guides Gd in association with extension and contraction of the tie bars 14.

A movable platen 12 which serves as a first movable member is disposed in opposition to the stationary platen 11 in a manner capable of advancing and retreating along the tie bars 14 in a mold-opening-closing direction. For this advancement and retreat, unillustrated guide holes corresponding to the tie bars 14 are formed in the movable platen 12 so as to allow the tie bars 14 to extend therethrough.

An unillustrated first threaded portion is formed at a front end portion of each of the tie bars 14. By means of engaging nuts n1 with the corresponding first threaded portions, the stationary platen 11 and the tie bars 14 are fixed to each other. A guide post 21 whose diameter is smaller than that of the tie bar 14 and which serves as a second guide member is formed integral with a predetermined rear portion of each of the tie bars 14. The guide posts 21 project rearward from the back surface of the rear platen 13. An unillustrated second threaded portion is formed at a portion of each of the guide posts 21 in the vicinity of the back surface of the rear platen 13. By means of engaging nuts n2 with the corresponding second threaded portions, the stationary platen 11 and the rear platen 13 are fixed to each other. In the present embodiment, the guide posts 21 are formed integral with the corresponding tie bars 14. However, the guide posts 21 and the tie bars 14 may be formed as separate members.

A stationary mold 15 which serves as a first mold is fixed to the stationary platen 11. A movable mold 16 which serves as a second mold is fixed to the movable platen 12. The stationary mold 15 and the movable mold 16 constitute a mold apparatus 19. As the movable platen 12 advances or retreats, the movable mold 16 comes into contact with or moves away from the stationary mold 15, thereby performing mold closing, mold clamping, and mold opening.

When mold clamping is performed, an unillustrated cavity is formed between the stationary mold 15 and the movable mold 16, and an unillustrated resin which serves as a molding material is injected into the cavities from an injection nozzle 18 of an injection apparatus 17 and fills the cavities. In this case, the stationary mold 15 and the movable mold 16 form a single cavity, and a single-cavity molding is performed by the mold apparatus 19.

When the mold apparatus 19 is cooled after resin is charged into the cavity whereby the resin is cooled and solidified, mold opening is performed. At this time, an ejector device 55 disposed at the back of the movable platen 12 is operated so as to project an unillustrated ejector pin from the movable mold 16, whereby a molded product can be removed.

An attraction plate 22 which serves as a second movable member is disposed in parallel with the movable platen 12 and rearward of the rear platen 13, in a manner capable of advancing and retreating along the guide posts 21 while being guided by the guide posts 21. Guide holes 23 corresponding to the guide posts 21 are formed in the attraction plate 22 so as to allow the guide posts 21 to extend therethrough. Each of the guide holes 23 consists of a large-diameter portion 24 which opens toward the rear platen 13 side and accommodates the corresponding ball nut n2, and a small-diameter portion 25 which opens toward the back surface of the attraction plate 22 and has a slide surface for allowing the corresponding guide post 21 to slide thereon. In the present embodiment, the attraction plate 22 is guided by the guide posts 21. However, the attraction plate 22 can be guided not only by the guide posts 21 but also by the guides Gd.

In order to advance and retreat the movable platen 12, a linear motor 28 which serves as a first drive section and as a drive section for mold opening and closing is disposed between the movable platen 12 and the frame Fr along the guides Gd independently of the tie bars 14. The linear motor 28 includes a stator 29 which serves as a first drive element and which is disposed on the frame Fr to extend in parallel with the guides Gd so as to correspond to the moving range of the movable platen 12, and a movable element 31 which serves as a second drive element and which is disposed at the lower end of the movable platen 12 to face the stator 29 and to extend over a predetermined range.

The movable element 31 includes a core 34 and a coil 35. The core 34 includes a plurality of magnetic-pole teeth 33 formed in such a manner as to project toward the stator 29 and to be arranged at predetermined pitch spacings. The coil 35 is wound around the magnetic-pole teeth 33. The magnetic-pole teeth 33 are formed in parallel with one another and perpendicularly to a moving direction of the movable platen 12. The stator 29 includes an unillustrated core and an unillustrated permanent magnet extending on the core. The permanent magnet is magnetized such that unillustrated N poles and S poles are arranged alternately at the same pitch spacings as those of the magnetic-pole teeth 33.

Accordingly, when the linear motor 28 is driven by means of applying a predetermined current to the coil 35, the movable element 31 is advanced or retreated. Accordingly, the movable platen 12 is advanced or retreated, whereby mold closing or mold opening can be performed.

When Lp, Lm, and Lst represent the length of the stator 29, the length of the movable element 31, and the stroke of the movable platen 12, respectively, the length Lm is set in accordance with the maximum thrust force of the linear motor 28, and the length Lp is set so as to satisfy:

$$Lp > Lm + Lst$$

That is, in order to secure the length Lm, the movable element 31 is disposed in such a manner that its front end projects frontward from the front end surface of the movable platen 12 by a predetermined amount, and its rear end projects rearward from the rear end surface of the movable platen 12 by a predetermined amount. The stator 29 is disposed in such a manner that its front end slightly projects frontward from the front end of the core 34 when the movable platen 12 and the movable mold 16 are placed in the advancement limit position, and its rear end slightly projects rearward from the rear end of the core 34 when the movable platen 12 and the movable mold 16 are placed in the retreat limit position.

In the present embodiment, the permanent magnet is disposed on the stator 29, and the coil 35 is disposed on the movable element 31. However, the following alternative is possible: the coil is disposed on the stator, and the permanent magnet is disposed on the movable element. In this case, since the coil does not move during the course of driving the linear motor 28, wiring for supplying power to the coil can be facilitated.

When the movable platen 12 is advanced, the movable mold 16 abuts the stationary mold 15, thereby performing mold closing. Subsequently, mold clamping is performed. In order to perform mold clamping, an electromagnet unit 37 which serves as a second drive section and as a drive section for mold clamping is disposed between the rear platen 13 and the attraction plate 22. In order to advance and retreat the attraction plate 22 in an interlocking relation with advancement and retreat of the movable platen 12 during mold closing and mold opening and in order to transmit a mold-clamping force generated by the electromagnet unit 37 to the movable platen 12 during mold clamping, a rod 39 which connects the movable platen 12 and the attraction plate 22 and which serves as a mold-clamping-force transmission member is disposed in such a manner that the rod 39 can advance and retreat and that the rod 39 axially overlaps the linear motor 28 at least partially. The linear motor 28 and the rod 39 are disposed asymmetrically in relation to each other.

The stationary platen 11, the movable platen 12, the rear platen 13, the attraction plate 22, the linear motor 28, the electromagnet unit 37, the rod 39, and the like constitute the mold-clamping apparatus 10.

The electromagnet unit 37 includes an electromagnet 49 which is disposed on the rear platen 13 side and serves as a first drive member, and an attraction portion 51 which is disposed on the attraction plate 22 side and serves as a second drive member. The attraction portion 51 is formed in a predetermined region of the front end surface of the attraction plate 22; in the present embodiment, in a region of the attraction plate 22 which surrounds the rod 39 and faces the electromagnet 49. Two horizontally extending parallel grooves 45 are formed in respectively predetermined regions of the back surface of the rear platen 13, which are located slightly above and below the rod 39 in the present embodiment. Thus, a core 46 having a rectangular shape is formed at a portion of the rear platen 13 between the grooves 45, and a yoke 47 is formed at the remaining portion of the rear platen 13. A coil 48 is wound on the core 46, whereby the electromagnet 49 is formed.

The core 46, the yoke 47, and the attraction plate 22 are formed by laminating ferromagnetic sheets and thus each assume the form of an electromagnetic steel laminate.

The electromagnet 49 is formed separately from the rear platen 13, and the attraction portion 51 is formed separately from the attraction plate 22. However, the following alternative is possible: the electromagnet is formed as a portion of the rear platen 13, and the attraction portion is formed as a portion of the attraction plate 22.

Accordingly, in the electromagnet unit 37, when current is applied to the coil 48, the electromagnet 49 is driven and attracts the attraction portion 51, thereby generating the aforementioned mold-clamping force.

The rod 39 is connected, at a rear end portion, to the attraction plate 22 and is connected, at a front end portion, to the movable platen 12. At the time of mold closing, advancement of the movable platen 12 advances the rod 39, thereby advancing the attraction plate 22. At the time of mold opening, retreat of the movable platen 12 retreats the rod 39, thereby retreating the attraction plate 22.

In order to implement the above operation, a hole 41 is formed in a central portion of the rear platen 13 for allowing the rod 39 to extend therethrough; a hole 42 is formed in a central portion of the attraction plate 22 for allowing the rod 39 to extend therethrough; and a bearing member Br1, such as a bush, for slidably supporting the rod 39 is disposed at a front end portion of the hole 41. Thread 43 is formed at a rear end portion of the rod 39. A nut 44 which is rotatably supported by the attraction plate 22 is engaged with the thread 43.

As described above, a single cavity is formed in the mold apparatus 19, and a single-cavity molding is performed. Therefore, the cavity is formed generally at the center of the movable platen 12. Accordingly, the ejector device 55 is preferably disposed in a central portion of the back surface of the movable platen 12, and thus, a space 56 for accommodating the ejector device 55 is formed within the rod 39.

At the time of completion of mold closing, the attraction plate 22 is located in the vicinity of the rear platen 13, and a predetermined gap $\delta$ is formed between the rear platen 13 and the attraction plate 22. When the gap $\delta$ is too small or too large, the attraction portion 51 fails to be sufficiently attracted; as a result, mold-clamping force becomes weak. The optimum gap $\delta$ varies with the thickness of the mold apparatus 19.

In view of the above, an unillustrated large-diameter gear is formed on the outer circumferential surface of the nut 44; an unillustrated mold-thickness-adjusting motor which serves as a third drive section and a drive section for adjusting mold thickness is disposed on the attraction plate 22; and an unillustrated small-diameter gear attached to an output shaft of the mold-thickness-adjusting motor is engaged with the gear formed on the outer circumferential surface of the nut 44.

When the mold-thickness-adjusting motor is driven so as to rotate the nut 44 by a predetermined amount in relation to the thread 43 and in accordance with the thickness of the mold apparatus 19, the position of the rod 39 in relation to the attraction plate 22 is adjusted. Thus, the position of the attraction plate 22 in relation to the stationary platen 11 and the movable platen 12 is adjusted accordingly, whereby the gap $\delta$ can be set to an optimum value set through adjustment.

The mold-thickness-adjusting motor, the gears, the nut 44, the rod 39, and the like constitute a mold-thickness-adjusting apparatus. The gears serve as a rotation transmission section for transmitting rotation of the mold-thickness-adjusting motor to the nut 44. The nut 44 and the thread 43 constitute a motion direction converter. The motion direction converter converts the rotary motion of the nut 44 to the rectilinear motion of the rod 39. In this case, the nut 44 serves as a first conversion element, and the thread 43 serves as a second conversion element.

Since the linear motor 28 is disposed at a position downwardly offset from the rod 39 such that the linear motor 28 overlaps the rod 39, the overall length of the mold apparatus 10 can be shortened. Further, since the linear motor 28 overlaps the rod 39 but the linear motor 28 does not overlaps the attraction plate 22, the attraction area of the electromagnet 49 can be secured, so that a greater mold-clamping force can be generated.

Next, the operation of the thus-configured mold-clamping apparatus 10 will be described.

When an old mold apparatus 19 is replaced with a new mold apparatus 19, first, adjustment of mold thickness is performed; i.e., the distance between the attraction plate 22 and the movable platen 12 is changed according to the thickness of the new mold apparatus 19. In this adjustment of mold thickness, the stationary mold 15 and the movable mold 16 are attached to the stationary platen 11 and to the movable platen 12, respectively. Next, the movable mold 16 is retreated, thereby bringing the mold apparatus 19 into an opened condition.

In a subsequent distance adjustment step, the linear motor 28 is driven so as to perform mold touch; i.e., the movable mold 16 is brought into contact with the stationary mold 15. At this time, clamping force is not generated. In this state, the mold-thickness-adjusting motor is driven for rotating the nut 44, so as to adjust the distance between the rear platen 13 and the attraction plate 22; i.e., the gap $\delta$, to a predetermined value.

In this connection, in order to prevent breakage of the coil 48 even when the rear platen 13 and the attraction plate 22 come into contact with each other, the coil 48 is embedded in the rear platen 13 in such a manner as not to project from the surface of the rear platen 13. In this case, the surface of the rear platen 13 functions as a stopper for preventing damage to the coil 48. In the case where the coil 48 projects from the surface of the rear platen 13, an unillustrated contact prevention stopper is disposed between the rear platen 13 and the attraction plate 22; for example, on the surface of the rear platen 13 in opposition to the attraction plate 22 or on the surface of the attraction plate 22 in opposition to the rear platen 13, so as to prevent breakage of the coil 48 which would otherwise result from contact between the rear platen 13 and the attraction plate 22.

Subsequently, a mold-opening-closing processing means of an unillustrated control section performs a mold-opening-closing process. At the time of mold closing, in the state of FIG. 2, the mold-opening-closing processing means applies current to the coil 35. Subsequently, the linear motor 28 is driven for advancing the movable platen 12, so as to bring the movable mold 16 into contact with the stationary mold 15 as shown in FIG. 1. At this time, an optimum gap $\delta$ is formed between the rear platen 13 and the attraction plate 22; i.e., between the electromagnet 49 and the attraction portion 51. Notably, force required for mold closing is sufficiently small as compared with mold-clamping force.

Subsequently, at the time of mold clamping, the mold-opening-closing processing means applies current to the coil 48 in the state shown in FIG. 1, whereby attraction force of the electromagnet 49 attracts the attraction portion 51. By this procedure, mold-clamping force is transmitted to the movable platen 12 via the attraction plate 22 and the rod 39, whereby mold clamping is performed. Notably, an unillustrated gap adjustment stopper may be disposed in order to form the predetermined gap $\delta$. Further, a contact prevention stopper may be disposed on the frame Fr.

The mold-clamping force is detected by an unillustrated load detector, and the detected mold-clamping force is sent to the aforementioned control section. The control section performs feedback control; specifically, current applied to the coil 48 is adjusted such that the mold-clamping force assumes a set value. During the course of mold clamping, a resin which is melted in the injection apparatus 17 is injected into the cavity of the mold apparatus 19 from the injection nozzle 18 and fills the cavities. Notably, a load cell disposed on the rod 39, a sensor for detecting elongation of the tie bars 14, or the like can be used as the load detector.

When the resin in the cavities is cooled and set, at the time of mold opening, in the state shown in FIG. 1, the mold-opening-closing processing means stops application of current to the coil 48. In association with this procedure, mold opening is performed; i.e., the linear motor 28 is driven for retreating the movable platen 12, and the movable mold 16 is brought to a retreat limit position, as shown in FIG. 2.

As described above, the linear motor 28 and the electromagnet 37 are disposed independently of each other. Therefore, positional accuracy at the time when the movable platen 12 is stopped can be enhanced.

Attraction force of the electromagnet 49 advances the attraction plate 22, and mold-clamping force is transmitted to the movable mold 16 via the rod 39 and the movable platen 12. Thus, response and stability of the mold-clamping apparatus 10 at the time of mold clamping can be improved.

Since no toggle mechanism is used to generate mold-clamping force, no bending moment is exerted on the movable platen 12. Thus, generation of strain on the mold-mounting surface of the movable platen 12 can be prevented.

Since the rod 39 has not only the function of transmitting mold-clamping force but also the function of adjusting mold thickness, the number of parts of the mold-clamping apparatus 10 can be reduced, thereby simplifying the structure of the mold-clamping apparatus 10 and reducing the size of the mold-clamping apparatus 10.

Since mold clamping is performed by means of the electromagnet unit 37, mold-clamping force can be readily controlled by means of adjusting current to be applied to the coil 48. In addition, since the movable platen 12 can be advanced and retreated by means of the linear motor 28, response and stability of the mold-clamping apparatus 10 can further be improved.

The mold-thickness-adjusting apparatus is provided at a single location; i.e., there is no need to dispose the mold-thickness-adjusting apparatus for each of the tie bars 14. Thus, the cost of the mold-clamping apparatus 10 can be reduced. Since the number of members moved in adjusting mold thickness is small, a motor having a small capacity can be used as the mold-thickness-adjusting motor. Accordingly, not only can the size of the mold-clamping apparatus 10 be reduced, but also accuracy in adjusting mold thickness can be enhanced.

Furthermore, since the stator 29 and the rod 39 are disposed in an axially overlapping condition, the axial dimension of the mold-clamping apparatus 10 can be reduced. Accordingly, the overall length of the mold-clamping apparatus 10 can be shortened, and the size of the mold-clamping apparatus 10 can be further reduced.

Moreover, since the linear motor 28 and the electromagnet 37 are provided independently of each other, the linear motor 28 and the movable platen 12 can be connected directly. Accordingly, accuracy of mold opening and closing can be enhanced sufficiently.

Since the rod 39 is disposed at central portions of the movable platen 12, the rear platen 13, and the attraction plate 22, the diameter of the rod 39 can be increased. Accordingly, since the thread 43 can have a sufficiently small lead, the rod 39 is not rotated even when, at the time of transmission of mold-clamping force to the movable platen 12 via the rod 39, reaction force generated on the movable platen 12 is applied to the rod 39. As a result, there is no need to dispose a brake for preventing rotation of the rod 39, whereby the structure of the mold-thickness-adjusting apparatus can be simplified.

After mold closing is performed by driving the linear motor 28, the electromagnet unit 37 is driven for performing mold clamping. Mold clamping causes the movable platen 12 to slightly advance. At this time, the movable element 31 of the linear motor 28 is slightly advanced. However, there is no need to drive the linear motor 28 synchronously with driving of the electromagnet unit 37. What is required is to stop application of current to the coil 35 for bringing the linear motor 28 in an undriven (free) condition. Thus, control of driving of the linear motor 28 can be simplified.

There is no need to dispose a lock mechanism, such as a mechanical lock or a shutter, for advancing the movable platen 12 in association with advancement of the attraction plate 22 during the course of mold clamping. Thus, not only can the structure of the mold-clamping apparatus 10 be simplified, but also the linear motor 28 can be driven under no load at the time of mold closing and mold opening. Accordingly, at the time of mold closing and mold opening, the movable platen 12 can be moved smoothly.

Furthermore, the linear motor 28 is disposed between the movable platen 12 and the frame Fr; thus, at the time of mold closing, thrust force generated by the linear motor 28 is transmitted directly to the movable platen 12. Accordingly, the positional accuracy of the movable platen 12 can be enhanced.

The core 46 and the yoke 47 assume the form of an electromagnetic steel laminate, and the entire attraction plate 22 assumes the form of an electromagnetic steel laminate. However, a portion of the rear platen 13 around the core 46 and the attraction portion 51 of the attraction plate 22 may each assume the form of a electromagnetic steel laminate. In the present example, the electromagnet 49 is formed on the back surface of the rear platen 13, and the attraction portion 51 is disposed on the front surface of the attraction plate 22 in such a manner as to face the electromagnet 49 and in a manner capable of advancing and retreating. However, the following alternative is possible: the attraction portion is disposed on the back surface of the rear platen 13, and the electromagnet is disposed on the front surface of the attraction plate 22 in such a manner as to face the attraction portion and in a manner capable of advancing and retreating.

The space 56 is formed within the rod 39, and the ejector device 55 is disposed in a center portion of the back surface of the movable platen 12. However, in the case where, instead of a single rod 39, a plurality of rods are used as a mold-clamping-force transmission member, the rods may be disposed around the ejector device 55. Moreover, in the case where a plurality of cavities are formed in the mold apparatus 19 for performing multi-cavity molding, it is unnecessary to dispose the ejector device 55 within the rod 39, and a plurality of ejector devices may be disposed around the rod 39.

In the present example, the linear motor 28 is disposed as a first drive section. However, in place of the linear motor 28, an electric motor, a hydraulic cylinder, or the like may be disposed as the first drive section. In the case where the motor is used, a rotary motion associated with rotation generated by driving the motor is converted to a rectilinear motion by means of a ball screw which serves as a motion direction converter, thereby advancing and retreating the movable platen 12.

Next will be described a second example in which a linear motor is disposed between the movable platen 12 and the rear platen 13. Like structural elements of the first and second examples are denoted by like reference numerals, and repeated description thereof is omitted. For the effect which the second example yields through employment of structural elements similar of the first example the similar to those of the first example, the effect which the first example yields is applied accordingly.

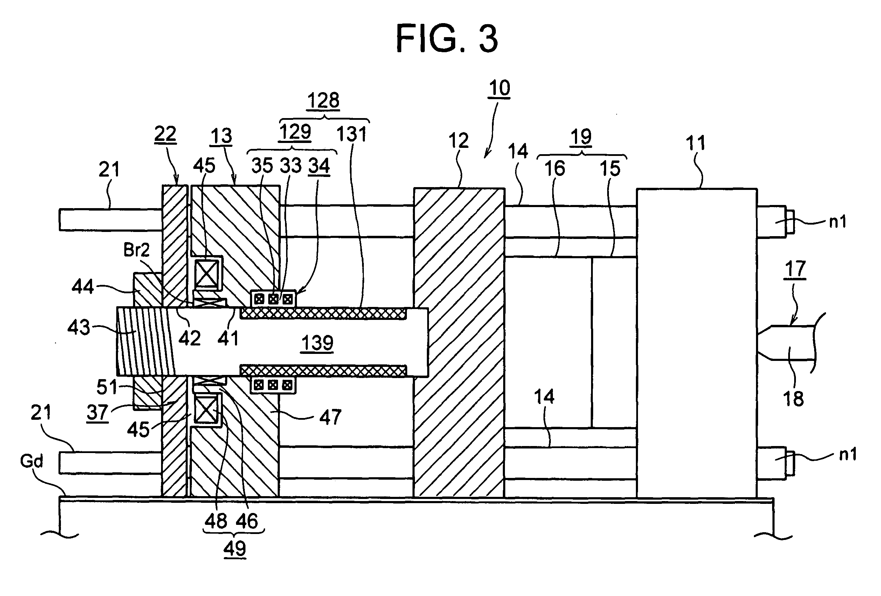

FIG. 3 is a view showing the second example in which the mold apparatus and the mold-clamping apparatus are in a mold-closed condition.

In this case, in order to advance and retreat the movable platen 12 serving as a first movable member, a linear motor 128 which serves as a first drive section and as a drive section for mold opening and closing is disposed between the movable platen 12 and the rear platen 13 serving as a second stationary member. The linear motor 128 includes a stator 129 which serves as a first drive element, and a movable element 131 which serves as a second drive element. The movable element 131 is formed on the outer circumferential surface of a rod 139 so as to correspond to the moving range of the movable platen 12. The rod 139, serving as a mold-clamping-force transmission member, extends through the rear platen 13 and the attraction plate 22 serving as a second movable member, and connects the movable platen 12 and the attraction plate 22. The linear motor 128 and the rod 139 share a common axis. The stator 129 is formed at a front end portion of a hole 41 to face the movable element 131 and extend over a predetermined range. The hole 41 is formed at a central portion of the rear platen 13 so as to allow the rod 139 to extend therethrough.

When Lp1, Lm1, and Lst represent the length of the movable element 131, the length of the stator 129, and the stroke of the movable platen 12, respectively, the length Lm1 is set in accordance with the maximum thrust force of the linear motor 128, and the length Lp1 is set so as to satisfy:

$$Lp1 > Lm1 + Lst$$

That is, in order to secure the length Lm1, the stator 129 is disposed in such a manner that its front end projects frontward from the front end surface of the rear platen 13 by a predetermined amount, and its rear end is embedded in the rear platen 13 to extend rearward from the front end surface of the rear platen 13 by a predetermined amount. The movable element 131 is disposed in such a manner that its front end slightly projects frontward from the front end of the core 34 when the movable platen 12 and the movable mold 16 serving as a second mold are placed in the retreat limit position, and its rear end slightly projects rearward from the rear end of the core 34 when the movable platen 12 and the movable mold 16 are placed in the advancement limit position.

The stator 129 includes the core 34 and a coil 35. The core 34 includes a plurality of magnetic-pole teeth 33 formed in such a manner as to project toward the movable element 131 and to be arranged at predetermined pitch spacings. The coil 35 is wound around the magnetic-pole teeth 33. The magnetic-pole teeth 33 are formed in parallel with one another and perpendicularly to a moving direction of the movable platen 12. The movable element 131 includes an unillustrated core and an unillustrated permanent magnet extending on the core. The permanent magnet is magnetized such that unillustrated N poles and S poles are arranged alternately at the same pitch spacings as those of the magnetic-pole teeth 33.

Accordingly, when the linear motor 128 is driven by means of applying a predetermined current to the coil 35, the movable element 131 is advanced or retreated. Accordingly, the movable platen 12 is advanced or retreated, whereby mold closing or mold opening can be performed.

In order to perform mold clamping after completion of mold closing, an electromagnet unit 37 which serves as a second drive section and as a drive section for mold clamping is disposed between the rear platen 13 and the attraction plate 22. The above-mentioned rod 139 is disposed such that it can advance and retreat in order to advance and retreat the attraction plate 22 in an interlocking relation with advancement and retreat of the movable platen 12 during mold closing and mold opening and in order to transmit a mold-clamping force generated by the electromagnet unit 37 to the movable platen 12 during mold clamping. Notably, the stationary platen 11, the movable platen 12, the rear platen 13, the attraction plate 22, the linear motor 128, the electromagnet unit 37, the rod 139, and the like constitute the mold-clamping apparatus 10.

Further, a hole 41 is formed in a central portion of the rear platen 13 for allowing the rod 139 to extend therethrough; a hole 42 is formed in a central portion of the attraction plate 22 for allowing the rod 139 to extend therethrough; and a bearing member Br2, such as a bush, for slidably supporting the rod 139 is disposed at a rear end portion of the hole 41. Thread 43 is formed at a rear end portion of the rod 139. A nut 44 which is rotatably supported by the attraction plate 22 is engaged with the thread 43. Notably, the mold-thickness-adjusting motor, which serves as a drive section for adjusting mold thickness, the gears, the nut 44, the rod 139, and the like constitute a mold-thickness-adjusting apparatus.

In the present example, the movable platen 12 is guided by means of the tie bars 14 serving as a connection member. However, the movable platen 12 may be guided by means of not only the tie bars 14 but also the guides Gd serving as a first guide member.

Since the movable element 131 and the rod 139 are disposed in an axially overlapping condition as described above, the axial dimension of the mold-clamping apparatus 10 can be reduced, whereby the size of the mold-clamping apparatus 10 can be reduced.

Next will be described a third example in which a link apparatus is disposed between the movable platen 12 and the rear platen 13. Like structural elements of the first and third examples are denoted by like reference numerals, and repeated description thereof is omitted. For the effect which the third example yields through employment of structural elements similar to those of the first example, the effect which the first example yields is applied accordingly.

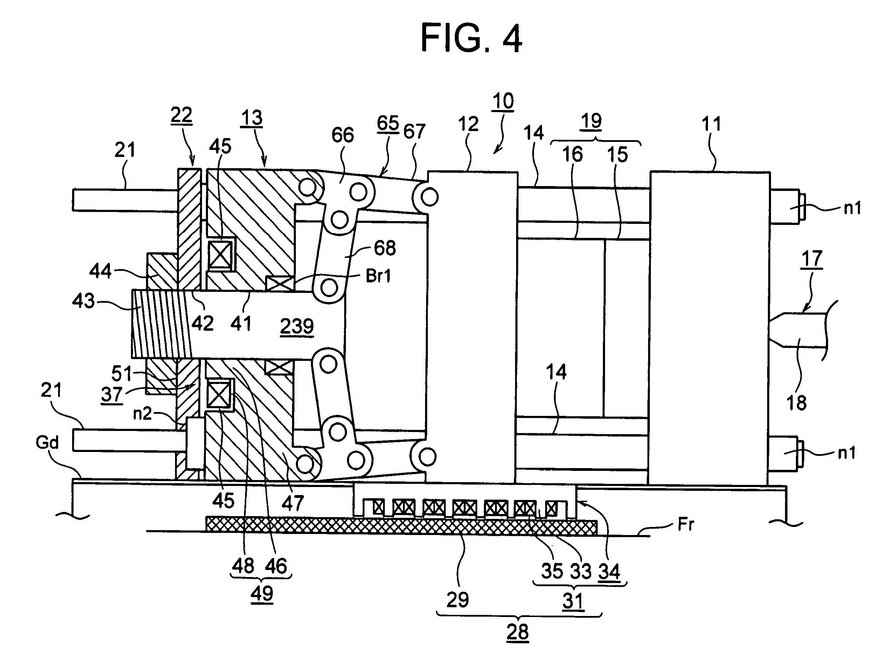

FIG. 4 is a view showing the third example in which the mold apparatus and the mold-clamping apparatus are in a mold-closed condition.

In this case, in order to advance and retreat the movable platen 12 which serves as a first movable member, a linear motor 28 which serves as a first drive section and as a drive section for mold opening and closing is disposed between the movable platen 12 and the frame Fr. When the linear motor 28 is driven by means of applying a predetermined current to the coil 35, the movable element 31 serving as a second drive element is advanced or retreated. Accordingly, the movable platen 12 is advanced or retreated, whereby mold closing or mold opening can be performed.

In order to perform mold clamping after completion of the mold closing, an electromagnet unit 37 which serves as a second drive section and as a drive section for mold clamping is disposed between the rear platen 13 which serves as a second stationary member and the attraction plate 22 which serves as a movable member. In order to advance and retreat the attraction plate 22 in an interlocking relation with advancement and retreat of the movable platen 12 during mold closing and mold opening and in order to transmit a mold-clamping force generated by the electromagnet unit 37 to the movable platen 12 during mold clamping, a rod 239 which serves as a first mold-clamping-force transmission member is disposed in such a manner that the rod 239 can advance and retreat.

Further, in order to amplify the mold-clamping force transmitted to the movable platen 12, a toggle mechanism 65 which serves a second mold-clamping-force transmission member and a mold-clamping-force amplifying member is disposed between the movable platen 12 and the rear platen 13 such that the toggle mechanism 65 can contract and extend. The toggle mechanism 65 is composed of a link apparatus and includes toggle levers 66 swingably supported by the rear platen 13 functioning as a toggle support; arms 67 connecting the toggle levers 66 and the movable platen 12 and swingably supported by the toggle levers 66 and the movable platen 12; and toggle levers 68 which connect the toggle levers 66 and the front end portion of the rod 239 which serves as a cross head and swingably supported by the toggle levers 66 and the rod 239. Notably, the stationary platen 11, the movable platen 12, the rear platen 13, the attraction plate 22, the linear motor 28, the electromagnet unit 37, the toggle mechanism 65, the rod 239, and the like constitute the mold-clamping apparatus 10.

Next, the operation of the thus-configured mold-clamping apparatus 10 will be described.

First, the mold-opening-closing processing means of the above-described control section performs a mold-opening-closing process. At the time of mold closing, the mold-opening-closing processing means applies current to the coil 35 so as to drive the linear motor 28. As a result, the movable platen 12 is advanced so as to bring the movable mold 16 which serves as a second mold into contact with the stationary mold 15 which serves as a first mold, as shown in FIG. 4. At this time, a gap $\delta 1$ optimal for generating attraction force is maintained between the rear platen 13 and the attraction plate 22; i.e., between the electromagnet 49 which serves as a first drive member and the attraction portion 51 which serves as a second drive member. Moreover, with advancement of the movable platen 12, the toggle mechanism 65 is extended. However, since the movable mold 16 is in contact with the stationary mold 15, the toggle mechanism 65 is not extended completely.

Subsequently, the mold-opening-closing processing means applies current to the coil 48 so as to drive the electromagnet unit 37 in the state shown in FIG. 4, whereby attraction force of the electromagnet 49 attracts the attraction portion 51. By this procedure, mold-clamping force is transmitted to the toggle mechanism 65 via the attraction plate 22 and the rod 239, whereby the mold-clamping force amplified by the toggle mechanism 65 is transmitted to the movable platen 12, and mold clamping is performed.

When a gap $\delta 2$ ($\delta 2 < \delta 1$) is formed between the electromagnet 49 and the attraction portion 51 upon further extension of the toggle mechanism 65, the toggle mechanism 65 is completely extended, whereby a sufficiently large mold-clamping force is generated and transmitted to the movable platen 12.

As described above, since the mold clamping is performed through extension of the toggle mechanism 65, the amount by which the attraction plate 22 advances at the time of mold clamping can be made smaller than the amount by which the movable platen 12 advances. Accordingly, the axial dimension of the mold-clamping apparatus 10 can be reduced, whereby the size of the mold-clamping apparatus 10 can be reduced.

In addition, since the mold-clamping force is amplified by the toggle mechanism 65, the area of the electromagnet 49 can be reduced, whereby the size of the mold-clamping apparatus 10 can be reduced.

Moreover, since the stator 29 which serves as a first drive element and the toggle mechanism 65 are axially overlap, the axial dimension of the mold-clamping apparatus 10 can be reduced, whereby the size of the mold-clamping apparatus 10 can be further reduced.

In this case, the gap $\delta 2$ is adjusted such that the rear platen 13 and the attraction plate 22 do not come into contact during performance of mold clamping. A stopper may be formed between the rear platen 13 and the attraction plate 22; for example, on a surface of the rear platen 13 facing the attraction plate 22 or a surface of the attraction plate 22 facing the rear platen 13 in order to maintain the gap $\delta 2$. Further, a stopper may be provided on the frame Fr at a predetermined position between the rear platen 13 and the attraction plate 22.

Before the toggle mechanism 65 is extended completely, the drive of the linear motor 28 is stopped, and the electromagnet unit 37 is driven. However, it is possible to stop the drive of the linear motor 28 and drive the electromagnet unit 37 when the toggle mechanism 65 is extended completely.

In this case, the mold-opening-closing processing means of the above-described control section performs a mold-opening-closing process. At the time of mold closing, the mold-opening-closing processing means applies current to the coil 35 so as to drive the linear motor 28. As a result, the movable platen 12 is advanced so as to bring the movable mold 16 into contact with the stationary mold 15 as shown in FIG. 4. At this time, the above-mentioned gap δ1 is maintained between the electromagnet 49 and the attraction portion 51. Moreover, with advancement of the movable platen 12, the toggle mechanism 65 is extended completely.

Subsequently, at the time of mold clamping, the mold-opening-closing processing means applies current to the coil 48 so as to drive the electromagnet unit 37, whereby attraction force of the electromagnet 49 attracts the attraction portion 51. By this procedure, mold-clamping force is transmitted to the toggle mechanism 65 via the attraction plate 22 and the rod 239, whereby the mold-clamping force amplified by the toggle mechanism 65 is transmitted to the movable platen 12, and mold clamping is performed.

The attraction plate 22 is then advanced with the toggle mechanism 65 extended completely, whereby a gap δ2 is formed between the electromagnet 49 and the attraction portion 51, and a sufficiently large mold-clamping force is generated and transmitted to the movable platen 12. The mold-thickness-adjusting motor serving as a drive section for adjusting mold thickness, the gears, the nut 44, the rod 239, and the like constitute a mold-thickness-adjusting apparatus.

Next will be described a first embodiment of the present invention in which a linear motor is disposed between the attraction plate 22 and the frame Fr. Like structural elements of the first example and the first embodiment are denoted by like reference numerals, and repeated description thereof is omitted. For the effect which the first embodiment yields through employment of structural elements similar to those of the first example, the effect which the first example yields is applied accordingly.

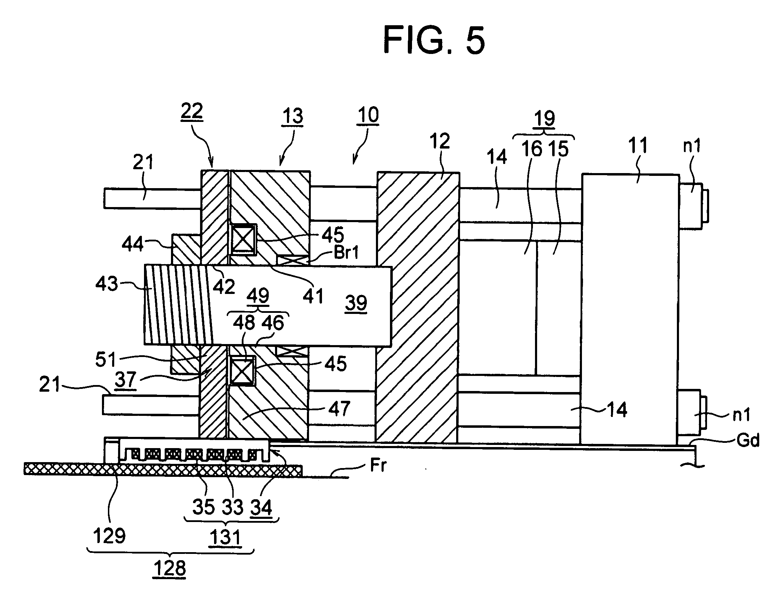

FIG. 5 is a view showing the first embodiment of the present invention in which the mold apparatus and the mold-clamping apparatus are in a mold-closed condition.

In this case, a linear motor 128 which serves as a first drive section and as a drive section for mold opening and closing includes a stator 129 which serves as a first drive element, and a movable element 131 which serves as a second drive element. The stator 129 is disposed on the frame Fr to extend in parallel with the guides Gd so as to correspond to the moving range of the movable platen 12 which serves as a first movable member and the attraction plate 22 which serves as a second movable member. The movable element 131 is disposed at the lower end of the attraction plate 22 to face the stator 129 and to extend over a predetermined range.

When Lm2, Lp2, and Lst1 represent the length of the stator 129, the length of the movable element 131, and the stroke of the movable platen 12 and the attraction plate 22, respectively, the length Lp2 is set in accordance with the maximum thrust force of the linear motor 128, and the length Lm2 is set so as to satisfy:

$$Lm2 > Lp2 + Lst1$$

That is, in order to secure the length Lp2, the movable element 131 is disposed in such a manner that its front end projects frontward from the front end surface of the attraction plate 22 by a predetermined amount, and its rear end projects rearward from the rear end surface of the attraction plate 22 by a predetermined amount. The stator 129 is disposed in such a manner that its front end slightly projects frontward from the front end of the core 34 when the movable platen 12, the attraction plate 22, and the movable mold 16 are placed in the advancement limit position, and its rear end slightly projects rearward from the rear end of the core 34 when the movable platen 12, the attraction plate 22, and the movable mold 16 are placed in the retreat limit position.

The rod 39 which serves as a mold-clamping-force transmission member is disposed while extending through the attraction plate 22 and through the rear platen 13 serving as a second stationary member and while being connected, at a rear end portion, to the attraction plate 22 and being connected, at a front end portion, to the movable platen 12.

Accordingly, when, at the time of mold closing or mold opening, the linear motor 128 is driven by means of applying a predetermined current to the coil 35 of the linear motor 128, thrust force which serves as a first output is generated, whereby the movable element 131 is advanced or retreated. Accordingly, the thrust force is output to the attraction plate 22 as mold-opening-closing force. The mold-opening-closing force is transmitted to the movable platen 12 via the rod 39, whereby the movable platen 12 is advanced or retreated; i.e., mold closing or mold opening can be performed.

In order to perform mold clamping after completion of mold closing, an electromagnet unit 37 which serves as a second drive section and as a drive section for mold clamping is disposed between the rear platen 13 and the attraction plate 22. At the time of mold clamping, when the electromagnet unit 37 is driven by means of applying predetermined current to the coil 48 of the electromagnet 49, thrust force which serves as a second output is generated on the attraction portion 51 which serves as a second drive member. The thrust force is output to the attraction plate 22 as mold-clamping force, and the mold-clamping force is transmitted to the movable platen 12. The stationary platen 11 which serves as a first stationary member, the movable platen 12, the rear platen 13, the tie bars 14 which serve as connection members, the guide posts 21 which serve as second guide members, the attraction plate 22, the linear motor 128, the electromagnet unit 37, the rod 39, and the like constitute the mold-clamping apparatus 10.

In this case, at the time of mold closing, thrust force generated by the linear motor 128 is transmitted to the attraction plate 22 and then to the movable platen 12 which is unitarily connected to the attraction plate 22 via the rod 39, thereby pressing the center of the movable platen 12. Thus, no inclination is formed on the movable platen 12. Therefore, when mold clamping is performed, the movable mold 16 can be pressed with uniform mold-clamping force.

Next will be described a second embodiment of the present invention in which a slide base is disposed between the attraction plate 22 and the linear motor 128. Like structural elements of the first and second embodiments are denoted by like reference numerals, and repeated description thereof is omitted. For the effect which the second embodiment yields through employment of structural elements similar to those of the first embodiment, the effect which the first embodiment yields is applied accordingly.

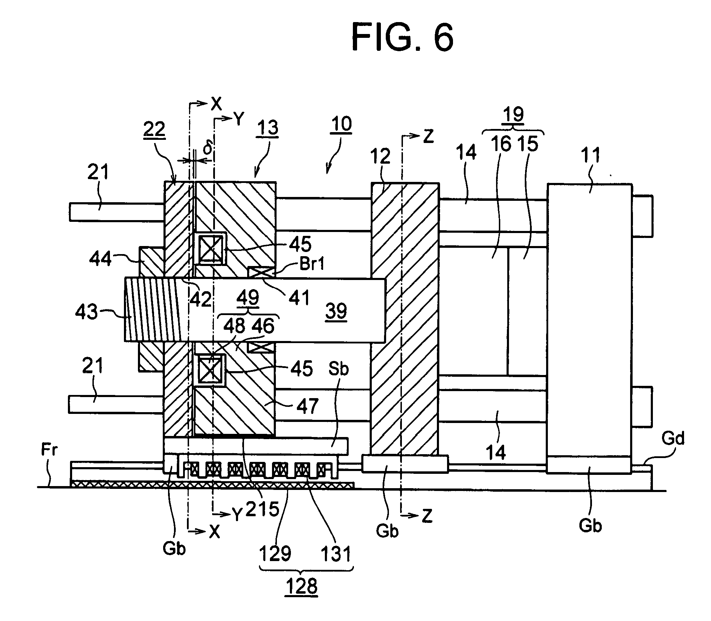

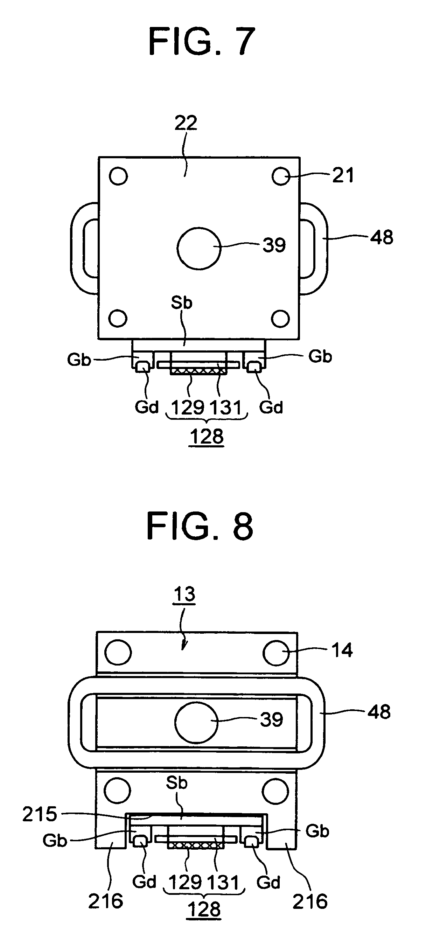

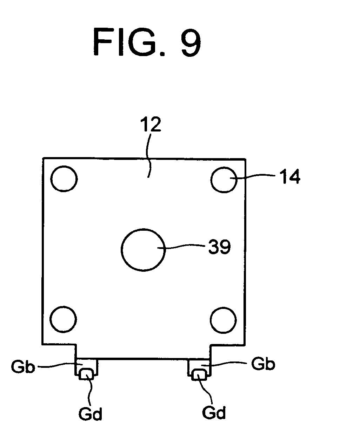

FIG. 6 is a view showing the second embodiment of the present invention in which the mold apparatus and the mold-clamping apparatus are in a mold-closed condition. FIG. 7 is a sectional view taken along line X-X of FIG. 6. FIG. 8 is a sectional view taken along line Y-Y of FIG. 6. FIG. 9 is a sectional view taken along line Z-Z of FIG. 6.

In this case, the stationary platen 11 which serves as a first stationary member, the movable platen 12 which serves as a first movable member, and the attraction plate 22 which serves as a second movable member are disposed on the guides Gd which serve as guide members, via guide blocks Gb which serve as members to be guided, whereas the rear platen 13 which serves as a second stationary member is fixed to the frame Fr. Accordingly, in association with extension and contraction of the tie bars 14 which serve as connection members, the stationary platen 11 slightly moves in relation to the guides Gd.

The linear motor 128 which serves as a first drive section and as a drive section for mold opening and closing is disposed between the attraction plate 22 and the frame Fr. The movable element 131 which serves as a second drive element is attached to the lower end of the attraction plate 22 via the slide base Sb which serves as a movable-member support section and as a thrust-force transmission section. The slide base Sb extends frontward in the longitudinal direction while covering the upper surface of the movable element 131. Accordingly, a space 215 is formed at the lower end of the rear platen 13 in such a surrounding manner as to allow the linear motor 128, the guides Gd, the guide blocks Gb, the slide base Sb, and the like to extend therethrough. As a result, the rear platen 13 is fixed to the frame Fr via leg portions 216 located on the opposite sides of the space 215.

In this case, at the time of mold closing, thrust force generated by the linear motor 128 is transmitted to the slide base Sb and the attraction plate 22 and then to the movable platen 12 which is unitarily connected to the attraction plate 22 via the rod 39 which serves a mold-clamping-force transmission member, thereby pressing the center of the movable platen 12. Thus, no inclination is formed on the movable platen 12. Therefore, when mold clamping is performed, the movable mold 16 can be pressed with uniform mold-clamping force.

The lower end of the attraction plate 22 and the rear end of the slide base Sb are joined together in a sufficiently firm condition, whereby the attraction plate 22 and the slide base Sb constitute a thrust-force transmission unit which has a shape resembling the letter "L" and functions as a rigid body. Accordingly, when, at the time of mold closing, thrust force generated by the linear motor 128 is transmitted to the attraction plate 22 via the slide base Sb and then to the rod 39, formation of inclination of the attraction plate 22 can be prevented. As a result, the thrust force can be smoothly transmitted to the movable platen 12 via the rod 39.

Next will be described a fourth example of the mold-clamping apparatus in which the slide base Sb is disposed between the movable platen 12 and the linear motor 128. Like structural elements of the second embodiment and the fourth example are denoted by like reference numerals, and repeated description thereof is omitted. For the effect which the fourth example yields through employment of structural elements similar to those of the second embodiment, the effect which the second embodiment yields is applied accordingly.

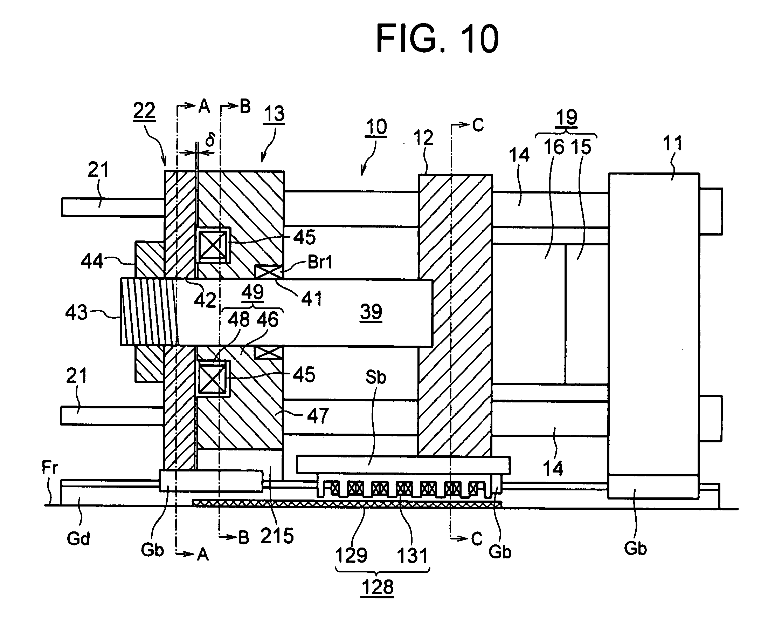

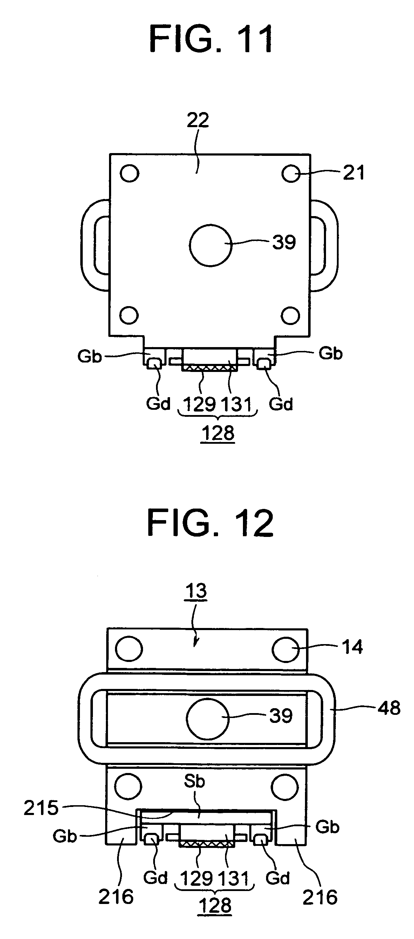

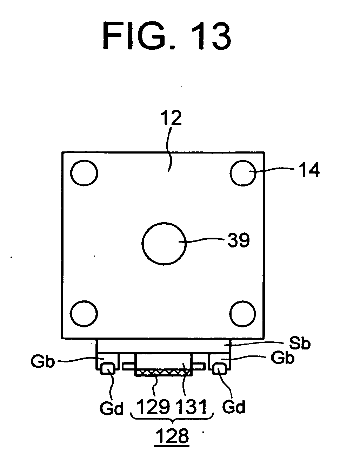

FIG. 10 is a view showing the fourth example in which the mold apparatus and the mold-clamping apparatus are in a mold-closed condition. FIG. 11 is a sectional view taken along line A-A of FIG. 10. FIG. 12 is a sectional view taken along line B-B of FIG. 10. FIG. 13 is a sectional view taken along line C-C of FIG. 10.

In this case, the stationary platen 11 which serves as a first stationary member, the movable platen 12 which serves as a first movable member, and the attraction plate 22 which serves as a second movable member are disposed on the guides Gd which serve as guide members, via guide blocks Gb which serve as members to be guided, whereas the rear platen 13 which serves as a second stationary member is fixed to the frame Fr. Accordingly, in association with extension and contraction of the tie bars 14 which serve as connection members, the stationary platen 11 slightly moves in relation to the guides Gd.

The linear motor 128 which serves as a first drive section and as a drive section for mold opening and closing is disposed between the movable platen 12 and the frame Fr. The movable element 131 which serves as a second drive element is attached to the lower end of the movable platen 12 via the slide base Sb which serves as a movable-member support section. The slide base Sb extends rearward in the longitudinal direction while covering the upper surface of the movable element 131. Accordingly, the space 215 is formed at the lower end of the rear platen 13 in such a surrounding manner as to allow the linear motor 128, the guides Gd, the guide blocks Gb, the slide base Sb, and the like to extend therethrough. As a result, the rear platen 13 is fixed to the frame Fr via the leg portions 216 located on the opposite sides of the space 215.

The lower end of the movable platen 12 and the front end of the slide base Sb are joined together in a sufficiently firm condition, whereby the movable platen 12 and the slide base Sb constitute a thrust-force transmission unit which has a shape resembling the letter "L" and functions as a rigid body. Accordingly, when, at the time of mold closing, thrust force generated by the linear motor 128 is transmitted to the movable platen 12 via the slide base Sb, formation of inclination on the movable platen 12 can be prevented. As a result, at the time of mold clamping, the movable mold 16 can be pressed with uniform mold-clamping force.

Next will be described a third embodiment of the present invention in which the slide base is disposed between the movable platen 12 and the linear motor 128 and between the attraction plate 22 and the linear motor 128. Like structural elements of the second and third embodiments are denoted by like reference numerals, and repeated description thereof is omitted. For the effect which the third embodiment yields through employment of structural elements similar to those of the second embodiment, the effect which the second embodiment yields is applied accordingly.

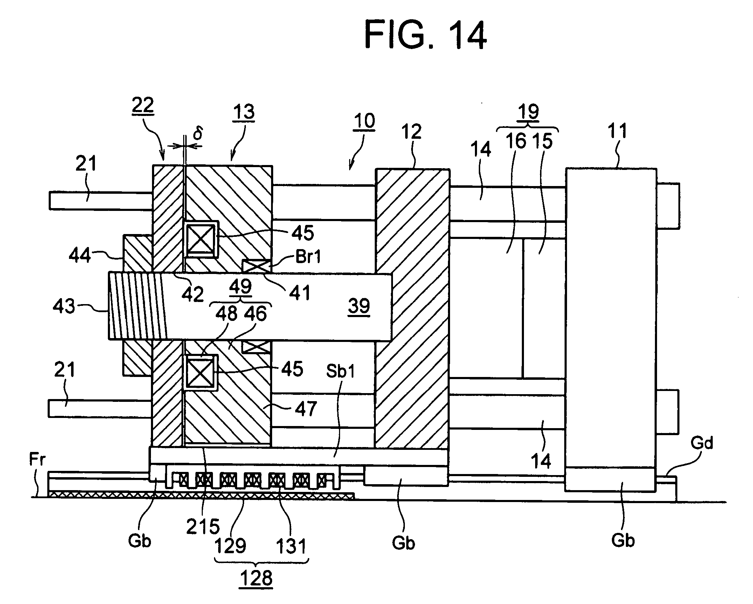

FIG. 14 is a view showing the third embodiment of the present invention in which the mold apparatus and the mold-clamping apparatus are in a mold-closed condition.

In this case, the stationary platen 11 which serves as a first stationary member, the movable platen 12 which serves as a first movable member, and the attraction plate 22 which serves as a second movable member are disposed on the guides Gd which serve as guide members, via guide blocks Gb which serve as members to be guided, whereas the rear platen 13 which serves as a second stationary member is fixed to the frame Fr. Accordingly, in association with extension and contraction of the tie bars 14 which serve as connection members, the stationary platen 11 slightly moves in relation to the guides Gd.

The linear motor 128 which serves as a first drive section and as a drive section for mold opening and closing is disposed between the movable platen 12 and the frame Fr and between the attraction plate 22 and the frame Fr. The movable element 131 which serves as a second drive element is attached via a slide base Sb1 which is provided between the lower end of the movable platen 12 and the lower end of the attraction plate 22 and serves as a movable-member support section. The slide base Sb1 extends in the longitudinal direction between the movable platen 12 and the attraction plate 22 while covering the upper surface of the movable element 131. Accordingly, the space 215 is formed at the lower end of the rear platen 13 in such a surrounding manner as to allow the linear motor 128, the guides Gd, the guide blocks Gb, the slide base Sb1, and the like to extend therethrough. As a result, the rear platen 13 is fixed to the frame Fr via the leg portions 216 (FIG. 8) located on the opposite sides of the space 215.

The lower end of the movable platen 12 and the front end of the slide base Sb1 are joined together, and the lower end of the attraction plate 22 and the rear end of the slide base Sb1 are joined together, whereby the movable platen 12, the attraction plate 22, and the slide base Sb1 constitute a thrust-force transmission unit which functions as a rigid body. Accordingly, when, at the time of mold closing, thrust force generated by the linear motor 128 is transmitted to the attraction plate 22 and to the movable platen 12 via the slide base Sb1, formation of inclination on each of the attraction plate 22 and the movable platen 12 can be prevented. As a result, at the time of mold clamping, the movable mold 16 can be pressed with uniform mold-clamping force.

Since thrust force transmitted via the rod 39 which serves as a mold-clamping-force transmission member presses the center of the movable platen 12, at the time of subsequent mold clamping, the movable mold 16 can be pressed with uniform mold-clamping force. Furthermore, at the time of mold closing, thrust force generated by the linear motor 128 is transmitted directly to the movable platen 12; thus, the positional accuracy of the movable platen 12 can be enhanced.

Either the lower end of the movable platen 12 and the front end of the slide base Sb1 or the lower end of the attraction plate 22 and the slide base Sb1 are detachably joined. At the time of mold closing, mold clamping, and mold opening, these joints remain joined. When mold thickness is to be adjusted, either one of the joints is detached so as to allow relative movement between the movable platen 12 and the attraction plate 22.

In the first embodiment, the stationary platen 11 is fixed to the frame Fr, whereas the rear platen 13 is disposed on the guides Gd and can be moved. In the second and third embodiments, the stationary platen 11 is disposed on the guides Gd and can be moved, whereas the rear platen 13 is fixed to the frame Fr. However, the following alternative is possible: either the stationary platen 11 or the rear platen 13 is fixed to the frame Fr, whereas the other one is disposed on the guides Gd and can be moved.

The present invention is not limited to the above-described embodiments. Numerous modifications and variations of the present invention are possible in light of the scope of the present invention, as defined by the appended claims.

INDUSTRIAL APPLICABILITY

The present invention can be applied to a mold-clamping apparatus of an injection molding machine.

**Claims**

1. A mold-clamping apparatus comprising:

   (a) a first stationary member (11) to which a stationary mold (15) is attached;
   (b) a first movable member (12) disposed in opposition to the first stationary member (11) and to which a movable mold (16) is attached;
   (c) a second movable member (22) adapted to be advanced and retreated with the first example movable member (12);
   (d) a mold-clamping-force transmission member (39) connecting the first and second movable members (12, 22);
   (e) a second stationary member (13) disposed between the first and second movable members (12, 22);
   (f) an electromagnet (49) adapted to generate a mold-clamping force between the second stationary member (13) and the second movable member (22) so as to perform mold clamping;

   said mold-clamping apparatus being **characterized by** further comprising:

   (g) a linear motor (128) comprising a movable element (131) connected to the second movable member (22) and a stator (129) disposed on a frame (Fr), the linear motor (128) being adapted to advance and retreat the first movable member (12) to thereby effect mold opening and closing, wherein the linear motor (128) is disposed on a different axis as that of the mold-clamping force transmission member (39) and axially overlaps the mold-clamping-force transmission member (39) at least partially.

2. A mold-clamping apparatus according to claim 1, wherein the first and second stationary members (11, 13) are connected to each other by use of four tie bars (14); and the linear motor (128) is disposed between right and left tie bars (14) along a guide member (Gd) which is disposed on the frame (Fr) and is independent of tie bars (14).

3. A mold-clamping apparatus according to claim 1, wherein the mold-clamping-force transmission member (39) extends through the second stationary member (13).

4. A mold-clamping apparatus according to claim 1, wherein a drive section for adjusting mold thickness is provided on the second movable member (22).

5. A mold-clamping apparatus according to claim 1, wherein a drive section for adjusting mold thickness is provided on the second stationary member (13).

6. A mold-clamping apparatus according to claim 1, wherein a movable-member support section is provided between the linear motor (128) and the second movable member (22).

7. A mold-clamping apparatus according to claim 1, wherein the first and second stationary members (11, 13) are connected to each other by use of four tie bars (14); and a coil (48) of the electromagnet (49) is disposed between upper and lower tie bars (14).

8. A mold-clamping method for a mold-clamping apparatus which comprises a first stationary member (11) to which a stationary mold (15) is attached; a first movable member (12) disposed in opposition to the first stationary member (11) and to which a movable mold (16) is attached; a second movable member (22) which is advanced and retreated with the first movable member (12); a mold-clamping-force transmission member (39) connecting the first and second movable members (12, 22); a second stationary member (13) disposed between the first and second movable members (12, 22); a linear motor (128) comprising a movable element (131) connected to the second movable member (22) and a stator (129) disposed on a frame (Fr); and an electromagnet (49) for performing mold clamping force, wherein the linear motor (128) is disposed on a different axis as that of the mold-clamping force transmission member (39) and axially overlaps the mold-clamping-force transmission member (39) at least partially, the mold-clamping method being **characterized by** comprising:

   (a) moving the movable element (131) connected to the second movable member (22) to the stator (129) disposed on the frame (Fr) with driving the linear motor (128) so as to effect mold closing and mold opening; and
   (b) generating a mold clamping force between the second stationary member (13) and the second movable member (22) with driving the electromagnet (49) so as to effect mold clamping.

**Patentansprüche**

1. Formverriegelungs- bzw. Formschließvorrichtung, die Folgendes aufweist:

   (a) ein erstes stationäres Glied (11), an dem ein stationäres Formwerkzeug bzw. eine stationäre Form (15) angebracht ist;

(b) ein erstes bewegbares Glied (12), das gegenüberliegend dem ersten stationären Glied (11) angeordnet ist und an dem eine bewegbare Form (16) angebracht ist;

(c) ein zweites bewegbares Glied (22), das angepasst ist, um mit dem ersten bewegbaren Glied (12) vorgeschoben und zurückgezogen zu werden;

(d) ein Formschließkraftübertragungsglied (39), das die ersten und zweiten bewegbaren Glieder (12, 22) verbindet;

(e) ein zweites stationäres Glied (13), das zwischen den ersten und zweiten bewegbaren Gliedern (12, 22) angeordnet ist;

(f) einen Elektromagnet (49), der angepasst ist, um eine Formschließkraft zwischen dem zweiten stationären Glied (13) und dem zweiten bewegbaren Glied (22) zu erzeugen, um ein Formverriegeln bzw. Formschließen auszuführen;

wobei die Formschließvorrichtung **dadurch gekennzeichnet ist, dass** sie ferner Folgendes aufweist:

(g) einen Linearmotor (128), der ein bewegbares Element (131) aufweist, das mit dem zweiten bewegbaren Glied (22) und einem Stator (129) verbunden ist, der auf einem Rahmen (Fr) angeordnet ist, wobei der Linearmotor (128) angepasst ist, um das erste bewegbare Glied (12) vorzuschieben und zurückzuziehen, um dadurch das Formöffnen und -schließen zu bewirken, wobei der Linearmotor (128) auf einer unterschiedlichen Achse als der des Formschließkraftübertragungsglieds (39) angeordnet ist und zumindest teilweise das Formschließkraftübertragungsglied (39) axial überlappt.

2. Formschließvorrichtung gemäß Anspruch 1, wobei die ersten und zweiten stationären Glieder (11, 13) miteinander durch die Verwendung von vier Führungssäulen (14) verbunden sind; und der Linearmotor (128) zwischen rechten und linken Führungssäulen (14) entlang eines Führungsglieds (Gd) angeordnet ist, das auf dem Rahmen (Fr) angeordnet und unabhängig von den Führungssäulen (14) ist.

3. Formschließvorrichtung gemäß Anspruch 1, wobei sich das Formschließkraftübertragungsglied (39) durch das zweite stationäre Glied (13) erstreckt.

4. Formschließvorrichtung gemäß Anspruch 1, wobei ein Antriebsabschnitt zur Anpassung der Formdicke auf dem zweiten bewegbaren Glied (22) vorgesehen ist.

5. Formschließvorrichtung gemäß Anspruch 1, wobei ein Antriebsabschnitt zur Anpassung der Formdicke auf dem zweiten stationären Glied (13) vorgesehen ist.

6. Formschließvorrichtung gemäß Anspruch 1, wobei ein Stützabschnitt des bewegbaren Glieds zwischen dem Linearmotor (128) und dem zweiten bewegbaren Glied (22) vorgesehen ist.

7. Formschließvorrichtung gemäß Anspruch 1, wobei die ersten und zweiten stationären Glieder (11, 13) miteinander durch Verwenden von vier Führungssäulen (14) verbunden sind; und eine Spule (48) des Elektromagnets (49) zwischen den oberen und unteren Führungssäulen (14) angeordnet ist.

8. Formverriegelungs- bzw. Formschließverfahren für eine Formschließvorrichtung, die Folgendes aufweist: ein erstes stationäres Glied (11), an dem eine stationäre Form (15) angebracht ist; ein erstes bewegbares Glied (12), das gegenüberliegend dem ersten stationären Glied (11) angeordnet ist und an dem eine bewegbare Form (16) angebracht ist; ein zweites bewegbares Glied (22), das mit dem ersten bewegbaren Glied (12) vorgeschoben und zurückgezogen wird; ein Formschließkraftübertragungsglied (39), das die ersten und zweiten bewegbaren Glieder (12, 22) verbindet; ein zweites stationäres Glied (13), das zwischen den ersten und zweiten bewegbaren Gliedern (12, 22) angeordnet ist; einen Linearmotor (128), der ein bewegbares Element (131) aufweist, das mit dem zweiten bewegbaren Glied (22) verbunden ist, und einen Stator (129), der auf deinem Rahmen (Fr) angeordnet ist; sowie einen Elektromagnet (49) zum Ausführen der Formschließkraft, wobei der Linearmotor (128) auf einer unterschiedlichen Achse als der des Formschließkraftübertragungsglieds (39) angeordnet ist und sich zumindest teilweise axial mit dem Formschließkraftübertragungsglied (39) überlappt, wobei das Formschließverfahren dadurch charakterisiert ist, dass es Folgendes aufweist:

(a) Bewegen des bewegbaren Elements (131), das mit dem zweiten bewegbaren Glied (22) verbunden ist, zu dem Stator (129), der auf dem Rahmen (Fr) angeordnet ist, wobei der Linearmotor (128) angetrieben wird, um das Formschließen und Formöffnen zu bewirken; und

(b) Erzeugen einer Formverriegelungs- bzw. Formschließkraft zwischen dem zweiten stationären Glied (13) und dem zweiten bewegbaren Glied (22) durch Antreiben des Elektromagnets (49), um das Formverriegeln bzw., Formschließen zu bewirken.

## Revendications

1. Dispositif de serrage de moule comprenant :

   (a) un premier élément fixe (11) auquel un moule fixe (15) est fixé ;
   (b) un premier élément mobile (12) disposé en opposition au premier élément fixe (11) et auquel un moule mobile (16) est fixé ;
   (c) un deuxième élément mobile (22) adapté à être avancé et reculé avec le premier élément mobile (12) ;
   (d) un élément de transmission de force de serrage de moule (39) connectant les premier et deuxième éléments mobiles (12, 22) ;
   (e) un deuxième élément fixe (13) disposé entre le premier et le deuxième élément mobile (12, 22) ;
   (f) un électroaimant (49) adapté à générer une force de serrage de moule entre le deuxième élément fixe (13) et le deuxième élément mobile (22) de façon à effectuer un serrage de moule ;

   le dispositif de serrage de moule étant **caractérisé en ce qu'**il comprend en outre :

   (g) un moteur linéaire (128) comprenant un élément mobile (131) connecté au deuxième élément mobile (22) et un stator (129) disposé sur un châssis (Fr), le moteur linéaire (128) étant adapté à faire avancer et reculer le premier élément mobile (12) pour effectuer ainsi une ouverture et une fermeture du moule,

   dans lequel le moteur linéaire (128) est disposé sur un axe différent de celui de l'élément de transmission de force de serrage de moule (39) et chevauche axialement l'élément de transmission de force de serrage de moule (39) au moins partiellement.

2. Dispositif de serrage de moule selon la revendication 1, dans lequel les premier et deuxième éléments fixes (11, 13) sont connectés entre eux à l'aide de quatre barres de liaison (14) ; et le moteur linéaire (128) est disposé entre des barres de liaison gauche et droite (14) le long d'un élément de guidage (Gd) qui est disposé sur le châssis (Fr) et est indépendant des barres de liaison (14).

3. Dispositif de serrage de moule selon la revendication 1, dans lequel l'élément de transmission de force de serrage de moule (39) s'étend à travers le deuxième élément fixe (13).

4. Dispositif de serrage de moule selon la revendication 1, dans lequel une section d'entraînement pour ajuster l'épaisseur du moule est prévue sur le deuxième élément mobile (22).

5. Dispositif de serrage de moule selon la revendication 1, dans lequel une section d'entraînement pour ajuster l'épaisseur du moule est prévue sur le deuxième élément fixe (13).

6. Dispositif de serrage de moule selon la revendication 1, dans lequel une section de support d'élément mobile est prévue entre le moteur linéaire (128) et le deuxième élément mobile (22).

7. Dispositif de serrage de moule selon la revendication 1, dans lequel les premier et deuxième éléments fixes (11, 13) sont connectés entre eux à l'aide de quatre barres de liaison (14) ; et un bobinage (48) de l'électroaimant (49) est disposé entre des barres de liaison supérieure et inférieure (14).

8. Procédé de serrage de moule pour un dispositif de serrage de moule qui comprend un premier élément fixe (11) auquel un moule fixe (15) est fixé ; un premier élément mobile (12) disposé en opposition au premier élément fixe (11) et auquel un moule mobile (16) est fixé ; un deuxième élément mobile (22) qui est avancé et reculé avec le premier élément mobile (12) ; un élément de transmission de force de serrage de moule (39) connectant les premier et deuxième éléments mobiles (12, 22) ; un deuxième élément fixe (13) disposé entre le premier et le deuxième élément mobile (12, 22) ; un moteur linéaire (128) comprenant un élément mobile (131) connecté au deuxième élément mobile (22) et un stator (129) disposé sur un châssis (Fr) ; et un électroaimant (49) pour générer une force de serrage de moule, le moteur linéaire (128) étant disposé sur un axe différent de celui de l'élément de transmission de force de serrage de moule (39) et chevauchant axialement l'élément de transmission de force de serrage de moule (39) au moins partiellement, le procédé de serrage de moule étant **caractérisé en ce qu'**il comprend les étapes suivantes :

   (a) déplacer l'élément mobile (131) connecté au deuxième élément mobile (22) vers le stator (129) disposé sur le châssis (Fr) en pilotant le moteur linéaire (128) de façon à effectuer une fermeture et une ouverture du moule ; et
   (b) générer une force de serrage de moule entre le deuxième élément fixe (13) et le deuxième élément mobile (22) en pilotant l'électroaimant (49) de façon à effectuer un serrage du moule.

FIG. 1

# FIG. 2

EP 1 726 427 B1

# FIG. 3

# FIG. 4

EP 1 726 427 B1

# FIG. 5

# FIG. 6

# FIG. 7

# FIG. 8

# FIG. 9

# FIG. 10

EP 1 726 427 B1

# FIG. 11

# FIG. 12

# FIG. 13

# FIG. 14

EP 1 726 427 B1

**EP 1 726 427 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3190600 A
- DE 3715161 A1
- JP 61154822 A